# EUROPEAN PATENT APPLICATION

(11) **EP 4 554 238 A1**
(43) Date of publication of application: **14.05.2025**
(21) Application number: 22953228.8
(22) Date of filing: 27.07.2022
(51) Int. Cl.: H04N 21/482, H04N 21/4782, H04N 21/443, H04N 21/4722, H04N 21/81

(54) **DISPLAY DEVICE AND OPERATING METHOD THEREOF**

(71) Applicant: LG Electronics Inc., Yeongdeungpo-gu Seoul 07336 (KR)
(72) Inventor: JUNG, Gihoon, Seoul 06772 (KR)
(74) Representative: Vossius & Partner Patentanwälte Rechtsanwälte mbB
(86) International application number: PCT/KR2022/011073
(87) International publication number: WO 2024/025003

(57) **Abstract**

The present disclosure is intended to provide a keyword search function for the content of web content. A display device according to an embodiment of the present disclosure may comprise: a display on which web content is displayed; and a controller configured to: extract a plurality of candidate search items by using a web document of the web content; determine a plurality of final search items from the plurality of candidate search items on the basis of a sorting condition; obtain keyword items of a first type from the plurality of determined final search items; and display the obtained keyword items on the display.

## Description

### TECHNICAL FIELD

The present disclosure relates to a display device providing a keyword search function.

### BACKGROUND ART

Digital TV services using wired or wireless communication network are becoming popular. Such a digital TV service may provide various services that may not be provided by the existing analog broadcasting service.

For example, in the case of IPTV (Internet Protocol Television) or smart TV service, which is a digital TV service type, it may provide bidirectionality in which a user may actively select a type of viewing program and a viewing time. IPTV and smart TV services may provide various additional services such as Internet search, home shopping, online games, and the like. based on the bidirectionality.

Recently, a keyword search function for analyzing a content that is currently being watched to provide a keyword search related to the content when pressing and holding a key of a remote controller while watching TV is being provided.

However, the function has a limitation in which only a keyword provided from an application installed on the TV by the TV manufacturer and a keyword provided by a service discovery protocol (SDP) server are provided.

That is, there is a limitation in that the keyword search function is not provided for web contents such as a content provided by a web-based third party application and a web page provided through a web browser.

There is US Patent Publication No. US 2013/0086056 as a prior patent document related thereto. However, the prior patent document provides only a context-sensitive menu by analyzing an area designated by a user as a closed section, but does not provide a keyword search for the designated area.

### DISCLOSURE OF THE INVENTION

### TECHNICAL PROBLEM

An object of the present disclosure is to provide a keyword search function for a web content.

An object of the present disclosure is to provide a search function for keywords neighboring a position of a cursor of a remote control device.

An object of the present disclosure is to provide only major search items according to preset priority options among a plurality of search items for a web content.

### TECHNICAL SOLUTION

A display device according to an embodiment of the present disclosure may include a display configured to display a web content, and a controller configured to:
extract a plurality of candidate search items by using a web document of the web content; determine a plurality of final search items from the plurality of candidate search items based on a sorting condition; obtain first type keyword items from the plurality of determined final search items; and display the obtained keyword items on the display.

When receiving a search request for a position of a search item contained in the plurality of candidate search items, the controller may be configured to obtain candidate search items disposed neighboring the search item of the plurality of candidate search items as the plurality of final search items.

When a priority option is set, the controller may be configured to determine the plurality of final search items from the plurality of candidate search items according to the priority option.

### ADVANTAGEOUS EFFECTS

According to the various embodiments of the present disclosure, the various keywords may be extracted from the application provided by the third party, the web application, and the web page provided through the web browser to provide the search results for the keywords. Therefore, the user experience may be significantly improved by receiving the richer search results without any restriction on the application.

According to the embodiment of the present disclosure, the keywords neighboring the search target may be provided to provide the user-customized search function.

According to the embodiment of the present disclosure, only the keywords having the preset properties may be extracted to provide the user-customized search function.

### BRIEF DESCRIPTION OF THE DRAWINGS

FIG. 1 is a block diagram illustrating a configuration of a display device according to an embodiment of the present disclosure.
FIG. 2 is a block diagram illustrating a remote control device according to an embodiment of the present disclosure.
FIG. 3 is a view illustrating an actual configuration of the remote control device according to an embodiment of the present disclosure.
FIG. 4 is a view illustrating an example of utilizing the remote control device according to an embodiment of the present disclosure.
FIG. 5 is a flowchart for explaining a method for operating a display device according to an embodiment of the present disclosure.
FIG. 6 is a view for explaining an example of extracting a plurality of keyword items from a PWS (or web application) according to an embodiment of the present disclosure.
FIG. 7 is a view for explaining an example of displaying keyword items extracted from a broadcast providing web data according to an embodiment of the present disclosure.
FIG. 8 is a flowchart for explaining a method for operating a display device according to another embodiment of the present disclosure.
FIG. 9 is a view for explaining an operation of hardware components that implement the operating method of FIG. 8.
FIG. 10a is a view for explaining a process of providing a keyword search function through Toss application linkage according to a related art, and FIG. 10b is a view for explaining a process of providing a keyword search function through Toss application linkage according to an embodiment of the present disclosure.
FIG. 11 is a view for explaining a process of providing search results depending on a keyword item selected from a plurality of keyword items through a mini browser according to an embodiment of the present disclosure.

### MODE FOR CARRYING OUT THE INVENTION

Hereinafter, embodiments relating to the present invention will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present invention, for example, as an artificial display device that adds a computer supporting function to a broadcast receiving function, may have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS may be used.

Accordingly, since various applications are freely added or deleted on a general purpose OS kernel, a display device described in the present invention, for example, may perform various user-friendly functions. The display device, in more detail, may be a network TV, Hybrid Broadcast Broadband TV (HBBTV), smart TV, light-emitting diode (LED) TV, organic light-emitting diode (OLED) TV, and so on and in some cases, may be applied to a smartphone.

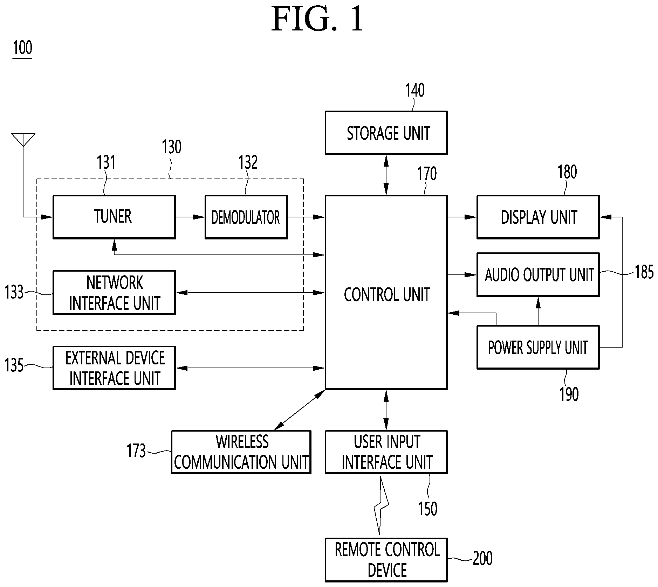

FIG. 1 is a block diagram illustrating a configuration of a display device according to an embodiment of the present disclosure.

Referring to FIG. 1, a display device 100 may include a broadcast reception module 130, an external device interface unit 135, a storage unit 140, a user input unit 150, a control unit 170, a wireless communication interface unit 173, a display 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display 180 or the audio output unit 185.

In addition, the control unit 170 may output image signals or voice signals of an external device such as a camera or a camcorder, which are input through the external device interface unit 135, through the display 180 or the audio output unit 185, according to an external device image playback command received through the user input unit 150.

Moreover, the control unit 170 may control the display 180 to display images, and may control the display 180 to display broadcast images input through the tuner 131, external input images input through the external device interface unit 135, images input through the network interface unit, or images stored in the storage unit 140. In this case, an image displayed on the display 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, or Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or interworking) with the display device 100. The wireless communication unit 173 may detect (or recognize) a wearable device capable of communication around the display device 100.

Furthermore, in the case that the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The display 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in FIG. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the audio output unit 185.

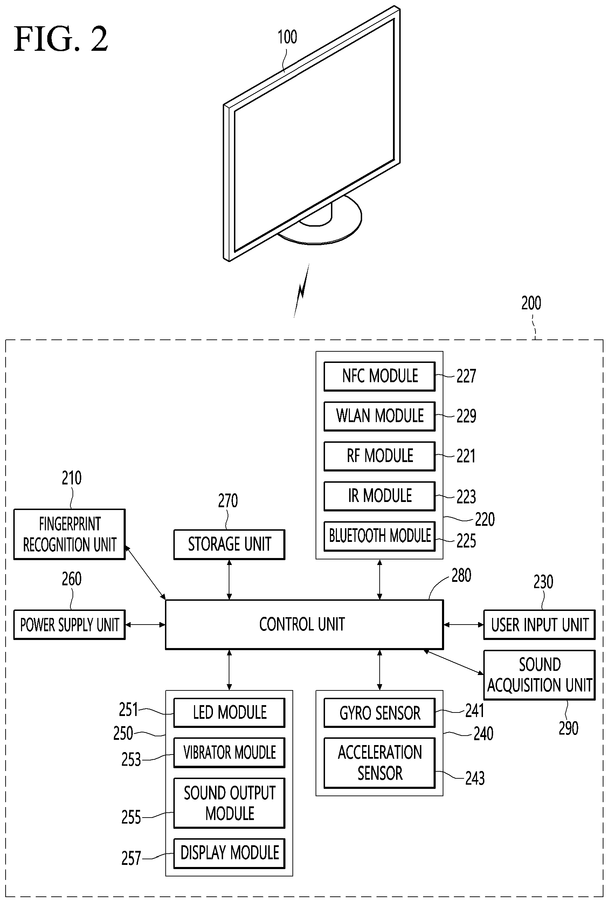

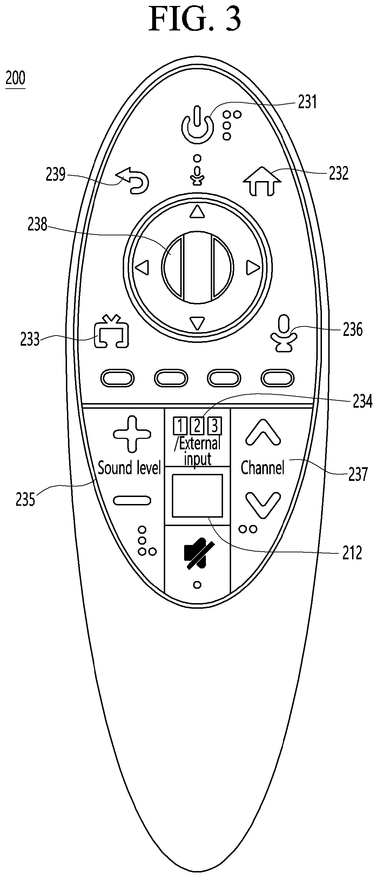

A remote control device according to an embodiment of the present disclosure will be described with reference to FIGS. 2 and 3.

FIG. 2 is a block diagram illustrating a remote control device according to an embodiment of the present disclosure and FIG. 3 is a view illustrating an actual configuration of a remote control device according to an embodiment of the present disclosure.

First, referring to FIG. 2, a remote control device 200 may include a fingerprint recognition unit 210, a wireless communication unit 220, a user input unit 230, a sensor unit 240, an output unit 250, a power supply unit 260, a storage unit 270, a control unit 280, and a microphone 290.

Referring to FIG. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. In the case that the user input unit 230 includes a hard key button, a user may input a command relating to the display device 100 to the remote control device 200 through the push operation of the hard key button. This will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

FIG. 2 is described again.

In the case that the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 based on x, y, and z axes and the acceleration sensor 243 may sense information on a movement speed of the remote control device 200. Moreover, the remote control device 200 may further include a distance measurement sensor that senses a distance with respect to the display 180 of the display device 100.

The output unit 250 may output image or voice signals in response to the operation of the user input unit 230, or may output image or voice signals corresponding to signals transmitted from the display device 100.

A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, in the case that the user input unit 230 is manipulated or signals are transmitted/received to/from the display device 100 through the wireless communication unit 220.

Additionally, the power supply unit 260 supplies power to the remote control device 200 and in the case that the remote control device 200 does not move for a predetermined time, stops the power supply, so that power waste may be reduced.

The power supply unit 260 may resume the supply of power in the case that a predetermined key provided at the remote control device 200 is operated.

The storage unit 270 may store various kinds of programs and application data required to control or operate the remote control device 200.

In the case that the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the microphone 290 of the remote control device 200 may acquire voice.

A plurality of the microphone 290 may be provided.

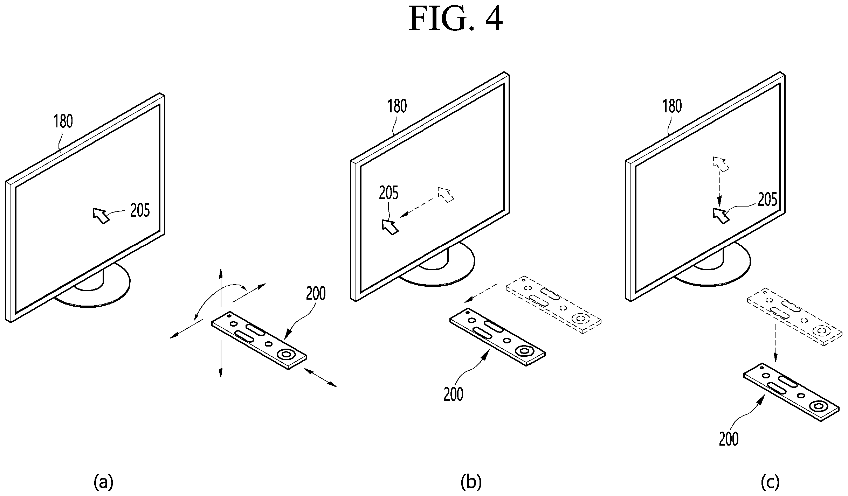

Next, FIG. 4 is described.

FIG. 4 is a view illustrating an example of utilizing a remote control device according to an embodiment of the present disclosure.

FIG. 4(a) illustrates that a pointer 205 corresponding to the remote control device 200 is displayed on the display 180.

A user may move or rotate the remote control device 200 vertically or horizontally. The pointer 205 displayed on the display 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

FIG. 4(b) illustrates that in the case that a user moves the remote control device 200, the pointer 205 displayed on the display 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

FIG. 4(c) illustrates that while a specific button in the remote control device 200 is pressed, a user moves the remote control device 200 away from the display 180. Thus, a selected region in the display 180 corresponding to the pointer 205 may be zoomed in and displayed in an enlarged size.

On the other hand, in the case that a user moves the remote control device 200 close to the display 180, a selection area in the display 180 corresponding to the pointer 205 may be zoomed out and displayed in a reduced size.

On the other hand, in the case that the remote control device 200 is moved away from the display 180, a selection area may be zoomed out and in the case that the remote control device 200 is moved closer to the display 180, a selection area may be zoomed in.

Additionally, in the case that a specific button in the remote control device 200 is pressed, recognition of a vertical or horizontal movement may be excluded. That is, in the case that the remote control device 200 is moved away from or closer to the display 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display 180 and also may be displayed in correspondence to a plurality of points such as a line and a surface.

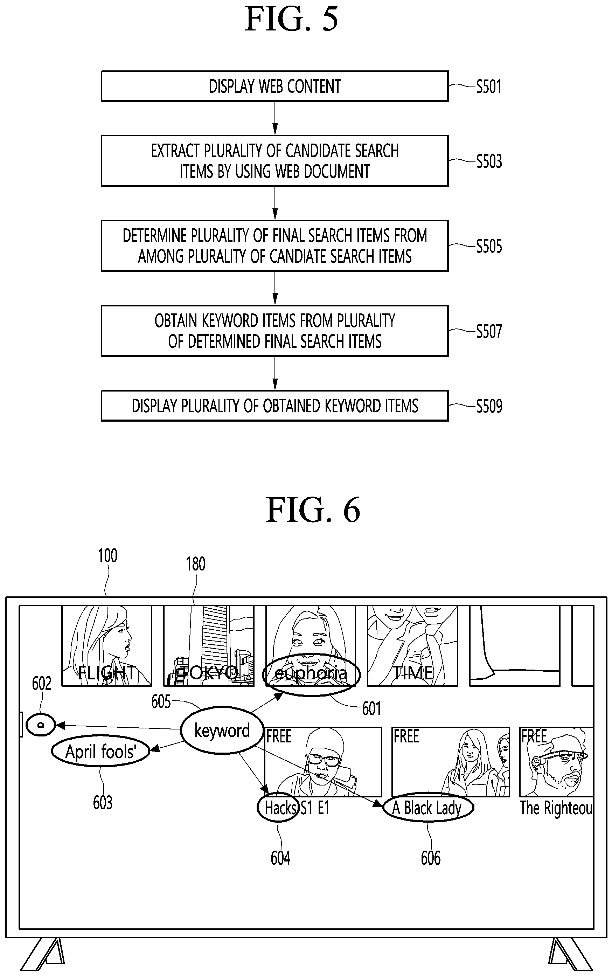

FIG. 5 is a flowchart for explaining a method for operating a display device according to an embodiment of the present disclosure.

A controller 170 of a display device 100 displays a web content on a display 180 (step S501).

In an embodiment, the web content may be a content to which a web-based third party is provided.

In another embodiment, the web content may be a content provided through a progressive web application (PWA). The web content may represent an execution screen of the PWA.

The PWA may be an application based on web technologies such as HTML and JavaScript.

In another embodiment, the web content may represent a web page executed by a web browser.

In another embodiment, the web content may be a web-based data broadcast.

The controller 170 of the display device 100 extracts a plurality of candidate search items using a web document corresponding to the web content (step S503).

In an embodiment, the web document may be a document written in a hyper text markup language (HTML) or a document written in a web language such as JavaScript.

The controller 170 may extract one or more of an image item, a title of a content, a text item such as a headline, a clickable item, a non-clickable item, and an item with a link from the web document.

The controller 170 may obtain the extracted items as the plurality of candidate search items. The controller 170 may generate the plurality of candidate search items into one candidate list.

The controller 170 may also extract coordinate information for each of the plurality of candidate search items.

The controller 170 may respectively match the coordinates of the corresponding items to the plurality of candidate search items.

The controller 170 of the display device 100 determines a plurality of final search items from the plurality of extracted candidate search items (step S505).

The controller 170 may determine the plurality of final search items from the plurality of candidate search items according to a sorting condition. The sort condition may be satisfied when either a search request for a target position or a priority option request is received.

In an embodiment, the controller 170 may extract search items neighboring a position of a cursor among the plurality of extracted candidate search items. The cursor may be a pointer that moves according to movement of the remote control device 200.

The position of the cursor may be a position of a target that is a search object (or a candidate search item contained in the web content).

That is, when the controller 170 receives a selection input of a confirmation button (OK button) provided on the remote control device 200 among the plurality of candidate search items, the controller may determine items at adjacent positions of the cursor as the final search items.

In another embodiment, the controller 170 may determine the plurality of final search items of the plurality of candidate search items based on the priority option request.

For example, the priority option request may be a request for extracting only the major keywords.

As another example, the priority option request may be a request that follows a sorting method variable.

First, the options will be described in detail later.

The controller 170 of the display device 100 obtains the plurality of keyword items based on the plurality of determined final search items (step S507).

In an embodiment, the controller 170 may obtain the plurality of determined final search items as the plurality of keyword items.

In another embodiment, the controller 170 may obtain additional search items for each of the plurality of determined final search items.

That is, the controller 170 may obtain a plurality of additional search items for one final search item. The controller 170 may obtain the plurality of additional search items for the final search item through a search link application. The plurality of keyword items may include the plurality of additional search items for each final search item.

The controller 170 may transmit the plurality of final search items to the server through the network interface 133 and receive the plurality of additional search items from the server.

The controller 170 of the display device 100 displays the plurality of obtained keyword items on the display 180 (step S509).

The controller 170 may display the plurality of keyword items on the web content.

The controller 170 may receive a command for selecting one of the plurality of keyword items and provide a search result for the selected keyword item in response to the received command.

The controller 170 may obtain search results for keyword items through any one of a plurality of search source applications installed on the display device 100 and display the obtained search results on the display 180.

FIG. 6 is a view for explaining an example of extracting the plurality of keyword items from a PWS (or web application) according to an embodiment of the present disclosure.

Referring to FIG. 6, the display device 100 may display an execution screen 600 of a web application on the display 180. The web application may be an application that provides a video streaming service.

The execution screen 600 may be a web page screen of the web browser or may be an execution screen of an application provided by a third party.

The display device 100 may obtain a web document corresponding to the execution screen 600 of the web application and extract a plurality of candidate search items from the web document.

The display device 100 may also obtain coordinate information for each of the plurality of candidate search items from the web document.

The display device 100 may determine a plurality of final search items from the plurality of candidate search items and obtain the plurality of determined final search items as keyword items.

The candidate search items may include a title, a headline, an image, an image link, and a menu button of each content item on the execution screen 600.

The candidate search items may be clickable or non-clickable.

The clickable items may be items that are capable of being selected by a user input. The clickable items may be items that are capable of being accessed through a link determined by the selection.

The display device 100 may extract a plurality of keyword items 601 to 606 from a candidate list including the candidate search items extracted from the execution screen 600.

The display device 100 may display the plurality of keyword items 601 to 606 on the display 180.

The first keyword item 601 may be a non-clickable item that is a text (movie title) displayed on an image.

The second keyword item 602 may be a clickable item that is capable of being used as a menu button to enter a home screen.

The third keyword item 603 may be a non-clickable headline item.

The fourth keyword item 604 may be a word contained in the text describing the content item and may not be clickable.

The fifth keyword item 605 may represent a keyword representing the execution screen 600.

The sixth keyword item 606 may be a clickable item that is a sentence contained in the text describing the content item.

As described above, according to an embodiment of the present disclosure, the various keywords may be extracted from the application provided by the third party, the web application, and the web page provided through the web browser to provide the search results for the keywords.

Therefore, an user experience may be significantly improved by receiving richer search results without any restriction on the application.

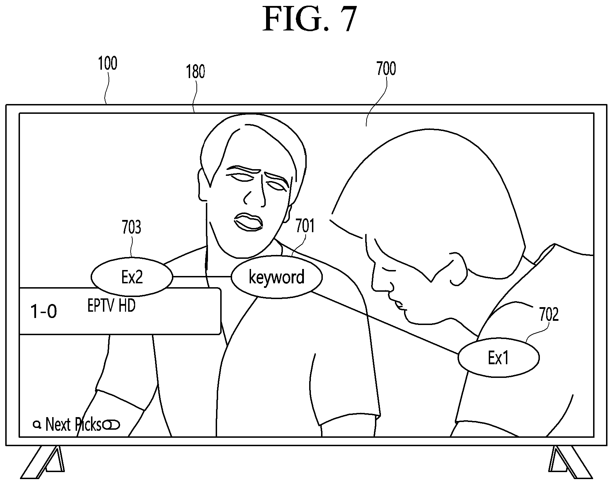

FIG. 7 is a view for explaining an example of displaying keyword items extracted from a broadcast providing web data according to an embodiment of the present disclosure.

Referring to FIG. 7, the display device 100 may display a web-based data broadcast image 700 on the display 180.

The display device 100 may receive a web-based data broadcast signals and web data through the network interface 133 or an external device interface 135.

The display device 100 may display a data broadcast image 700 on the display 180 based on the web-based data broadcast signal.

The web data may include content information for data broadcast image 700. The content information may include one or more of a title of the data broadcast image 700, a name of a character, a character's appearance in the work, and character's fashion information.

The display device 100 may obtain ma plurality of detailed items contained in the content information as keyword items.

The display device 100 may obtain the plurality of candidate search items based on the broadcast information (e.g., EPG information).

The display device 100 may obtain some of the items of the plurality of detailed items based on the web data and the plurality of candidate search items based on the broadcast information as the keyword items.

As described above, according to an embodiment of the present disclosure, a more diverse search environment may be provided to the user by mixing the detailed items based on the web data and the keyword items based on the existing broadcast information.

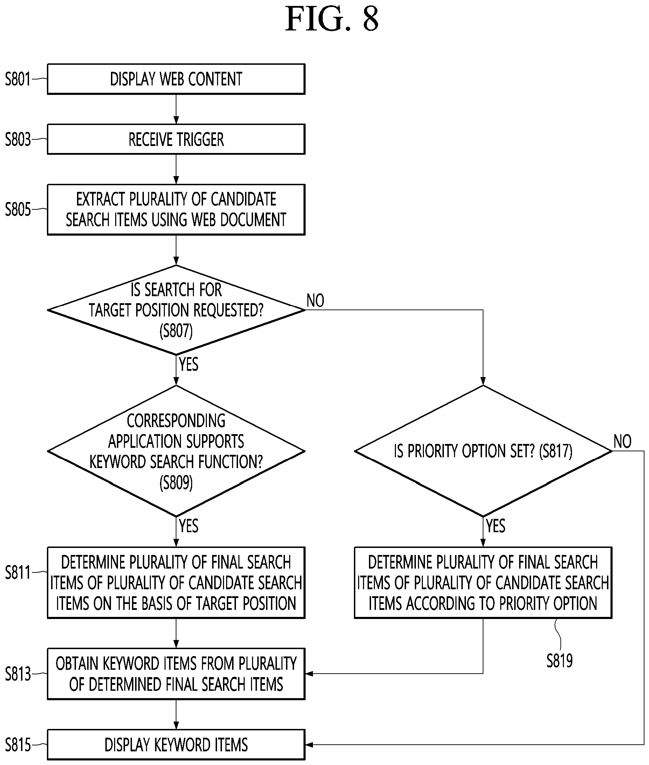

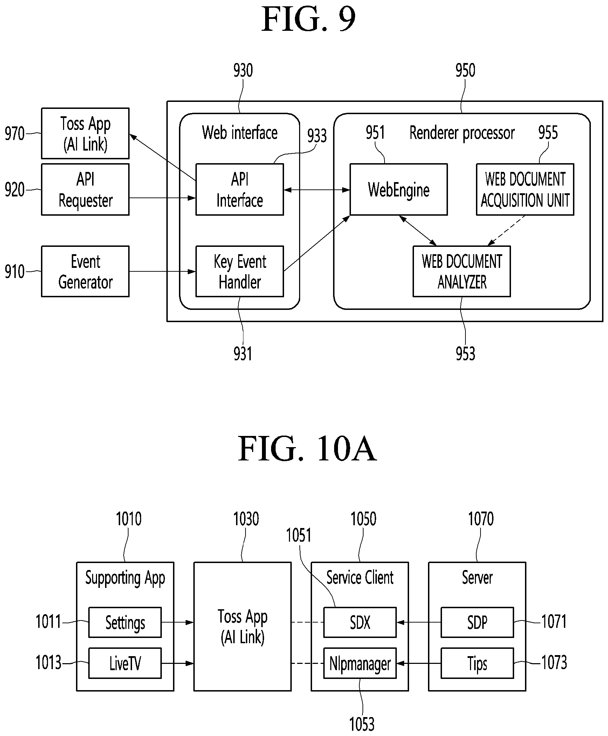

FIG. 8 is a flowchart for explaining a method for operating a display device according to another embodiment of the present disclosure, and FIG. 9 is a view for explaining an operation of hardware components that implement the operating method of FIG. 8.

Particularly, FIG. 8 is a view for explaining the embodiment of FIG. 5 in more detail.

FIG. 9 illustrates components included in a display device 100. Particularly, FIG. 9 illustrates components included in a controller 170 of the display device 100.

The controller 170 may include only a web interface 930 and a renderer processor 950. As another example, the web interface 930 may be a component included in a user input interface 150.

The web interface 930 may host a web service and receive a request or transmit a response from an external server or external device.

The renderer processor 950 may extract a plurality of final search items through web document analysis.

The web interface 930 may include a key event handler 931 and an API interface 933.

The renderer processor 950 may include a web engine 951, a web document analyzer 953, and a web document acquisition unit 955.

Referring to FIG. 8, the controller 170 of the display device 100 displays a web content on a display 180 (S801).

In an embodiment, the web content may be a content to which a web-based third party is provided.

In another embodiment, the web content may be a content provided through a progressive web application (PWA). The web content may represent an execution screen of the PWA.

The PWA may be an application based on web technologies such as HTML and JavaScript.

In another embodiment, the web content may represent a web page executed by a web browser.

In another embodiment, the web content may be a web-based data broadcast.

The controller 170 of the display device 100 receives a trigger for providing a keyword search function (S803).

The keyword search function may be a function that is capable of providing search results for keywords extracted through an application's execution screen or web documents of the web page. The keyword search function may be named an AI magic link function.

In an embodiment, the controller 170 may receive a trigger from a remote control device 200 to provide a keyword search function while displaying the web content. A user may create a trigger for the keyword search function by inputting a selection of an OK button provided on a remote control device 200 for a certain period of time.

The event generator 910 may transmit a command received from the remote control device 200 to the key event handler 931. The key event handler 931 may process the received command.

The key event handler 931 may transmit the received command to the web engine 951.

In another embodiment, the controller 170 may recognize an application programming interface (API) request as the trigger when receiving the API request. That is, the API request may be a trigger for the keyword search function.

The API request may have additional priority options to be described below.

An API requester 920 may transmit the API request to the API interface 933.

The API interface 933 may transmit the received API request to the web engine 951.

The controller 170 of the display device 100 extracts a plurality of candidate search items using a web document corresponding to the web content (S805).

The web document acquisition unit 955 of the controller 170 may obtain the web document that constitutes the web content.

The web document analyzer 953 may inject a contents analyzer injection code into the web document. The contents analyzer injection code may be a preset code for extracting keywords from the web document.

The web engine 951 may extract a plurality of candidate search items and a plurality of coordinates respectively corresponding to the plurality of candidate search items by injecting the contents analyzer injection code into the web document.

The controller 170 of the display device 100 determines whether there is a search request for a target position on the screen on which the web content is displayed (S807).

The key event handler 931 of the web interface 930 may determine that there is a search request for a target position when a cursor input is received from the event generator 910. The cursor input may be an input of a cursor controlled by movement of the remote control device 200.

The target position may be a position of the candidate search item.

The key event handler 931 may determine that the search request for the target position is performed when the cursor is disposed on the web content and the command corresponding to the selection of the OK button of the remote control device 200 is received.

When there is the search request for the target position, the controller 170 of the display device 100 determines whether the application providing the web content supports the keyword search function (step S809).

The web interface 930 may determine whether the application supports the keyword search function based on application setting information. The application setting information may include information about whether the keyword search function is allowed.

The controller 170 of the display device 100 determines the plurality of final search items of the plurality of candidate search items based on the target position when the application supports the keyword search function (S811).

The web interface 930 may determine a candidate search item neighboring the target position among the plurality of candidate search items as the final search item.

The web interface 930 may obtain coordinate information of the cursor at a time point at which the trigger received from the remote control device 200 is received.

The web interface 930 may compare the coordinate information of the cursor with the coordinate information of each of the plurality of candidate search items.

The web interface 930 may extract the final search items that are within a preset difference from the cursor coordinate information among the plurality of candidate search items based on the comparison results.

The web interface 930 may transmit the extracted final search items to a Toss application 970.

The final search items may be converted into a format suitable for processing by the Toss application 970 and be transmitted to the Toss application 970.

The Toss application 970 may provide a keyword search function based on the received final search items.

The Toss application 970 may generate a plurality of keyword items respectively corresponding to the final search items.

The controller 170 of the display device 100 obtains the plurality of keyword items based on the plurality of determined final search items (step S813).

The controller 170 may obtain keyword items respectively corresponding to the plurality of final search items through the Toss application 970.

The controller 170 of the display device 100 displays the plurality of obtained keyword items on the display 180 (step S815).

In another embodiment, the controller 170 may transmit the plurality of keyword items to the external device through a wireless communication interface 173.

The controller 170 of the display device 100 determines whether a priority option for sorting the plurality of candidate search items is set when there is no search request for the target position (step S817).

When the web engine 951 of the controller 170 receives the API request through the API interface 933, it may determine whether the API request includes the priority option.

First, the option may be an option for filtering the plurality of candidate search items based on preset conditions.

First, the option may be an option to extract at least one of the title of the content or the clickable item of the plurality of candidate search items.

In an embodiment, the priority option may be an option for extracting only the name of the content of the plurality of candidate search items.

In another embodiment, the priority option may be an option for extracting the clickable item of the plurality of candidate search items.

In another embodiment, the priority option may be an option for extracting only items associated with the name of the web content that is being played.

As described above, the priority option may be set in various manners depending on the property.

The controller 170 of the display device 100 determines the plurality of final search items of the plurality of candidate search items according to the priority option when the priority option is set (step S819).

The web engine 951 may determine the plurality of final search items from the plurality of candidate search items based on the priority option when the API request includes the priority option.

Thereafter, the display device 100 may sequentially perform operations S813 and S815.

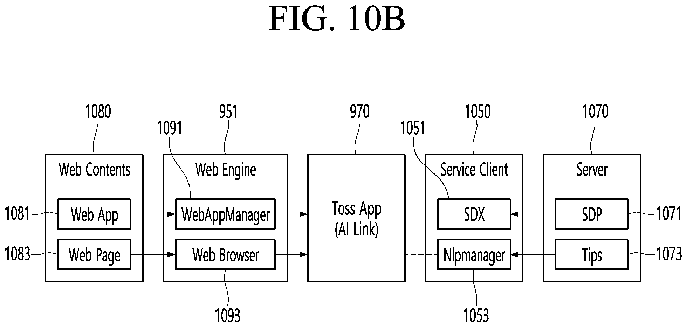

FIG. 10a is a view for explaining a process of providing a keyword search function through a Toss application linkage according to a related art, and FIG. 10b is a view for explaining a process of providing a keyword search function through a Toss application linkage according to an embodiment of the present disclosure.

In the related art, the keyword search function was available only in some limited applications.

Referring to FIG. 10a, a support application 1010 and a Toss application 1030 may be applications installed on the display device 100.

The support application 1010 providing a keyword search function includes a setting menu application 1011 for setting an operation of the display device 100 and a LiveTV application 1013 providing real-time broadcasting.

The Toss application 1030 may receive search items received from the settings menu application 1011 or search items received from the LiveTV application 1013 to obtain a search result for each of the received search items.

The search results may be keyword items corresponding to the search items.

The Toss application 1030 may transmit the search items received from the settings menu application 1011 to an SDX 1051 of a service client 1050, and the SDX 1051 may transmit the search items to a service discovery protocol (SDP) server 1071.

The service client 1050 may be an interface for communicating with the server 1070.

The SDP server 1051 may transmit information about one or more applications that are capable of providing the search results for the search items to the SDX 1051, and the SDX 1051 may transmit the received information about one or more applications to the Toss application 1030.

The Toss application 1030 may display an application icon on the display 180 based on the received information about one or more applications. The user may select an application icon to receive a search result for its search item through the corresponding application.

The Toss application 1030 may transmit the search items received from the LiveTV application 1013 to an NLP manager 1053 of the service client 1050, and the NLP manager 1053 may transmit the search items to the service discovery protocol (SDP) server 1071.

The NLP manager 1053 may generate analysis results for the search items and transmit the search items and the analysis results to a TIPS server 1073.

The TIPS server 1073 may transmit one or more keyword items corresponding to the search items and a link for each keyword item based on the broadcast information (e.g., EPG information) to the NLP manager 1053, and the NLP manager 1053 may transmit the one or more received keyword items and the link to the Toss application 1030.

The Toss application 1030 may display the one or more received keyword items on the display 180.

According to the related art of FIG. 10a, the keyword search function was limited to operate for only some applications installed on the display device 100.

Referring to FIG. 10b, a web content 1080 may include an execution screen of a web application 1081 and a web page 1083.

The web engine 951 may include a web application manager 1091 and a web browser 1093.

The web application manager 1091 may extract a plurality of candidate search items from a web document corresponding to the execution screen of the web application 1081.

The web browser 1093 may extract a plurality of candidate search items from the web document of the web page 1083.

Each of the web application manager 1091 and the web browser 1093 may transmit the plurality of candidate search items to the Toss application 970.

In another embodiment, each of the web application manager 1091 and the web browser 1093 may extract the plurality of final search items from the plurality of candidate search items based on the search request for the priority option or target position.

The plurality of extracted final search items may be transmitted to the Toss application 970.

The Toss application 970 may transmit the plurality of received candidate search items or the plurality of final search items to the server 1070 through the service client 1050.

The service client 1050 may have a configuration corresponding to either the network interface 133 or the external device interface 135 of FIG. 1.

The server 1070 may extract one or more keyword items for each of the plurality of received candidate search items or the plurality of final search items.

The server 1070 may transmit the one or more extracted keyword items to the service client 1050. The service client 1050 may transmit the one or more extracted keyword items to the Toss application 970.

The Toss application 970 may display the one or more keyword items received from the server 1070 and the keyword items created by itself on the display 180.

That is, the Toss application 970 may obtain first type keyword items generated by itself from each of the plurality of candidate search items or the plurality of final search items and second type keyword items received from the server 1070, and display the obtained first and second types keyword items on the display 180.

As described above, according to an embodiment of the present disclosure, unlike in the related art, the content of the web content may be analyzed by the web engine 951, keywords may be extracted and then provided to the Toss application 970.

Thus, it may be possible to support linking with the Toss application 970, which provides the keyword search function for a third party web content and a PWA application.

In addition, the Toss application 970 may also be linked with an existing server 1070.

In addition, when extracting an image to analyze and process the image, a search function for the image may be provided by being linked with the server 1070 through the Toss application 970.

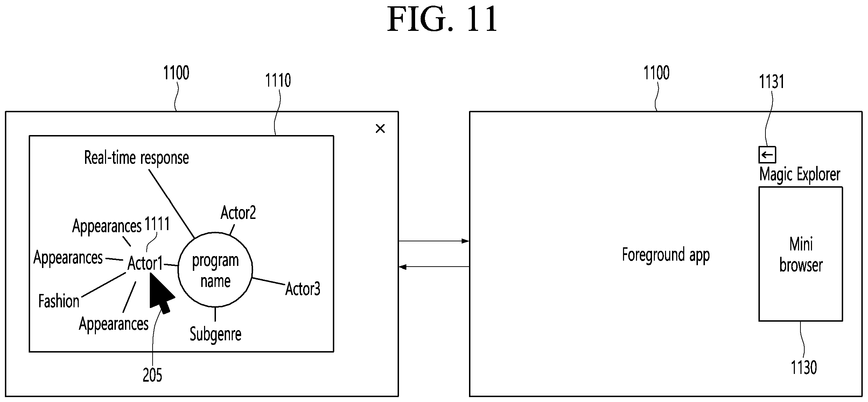

FIG. 11 is a view for explaining a process of providing search results depending on the keyword item selected from the plurality of keyword items through a mini browser according to an embodiment of the present disclosure.

Referring to FIG. 11, a web content 1100 is displayed on the display. The web content 1100 may be either an execution screen of a web application or a web page.

In addition, the display device 100 may display a keyword set 1110 including keyword items obtained through web document analysis in response to a request for a keyword search function of the web content 1100.

When the display device 100 receives a command for selecting one keyword item 1111 of a plurality of keyword items contained in the keyword set 1110, it may display a mini browser 1130 including search results for the keyword item 1111 selected according to the received command.

At the same time, the display device 100 may allow the keyword set 1110 to disappear.

The keyword item 1111 may be selected through a pointer 205 (or cursor) that is controllable by the remote control device 200.

When the display device 100 receives a command for selecting a back button provided in the remote control device 200 or a command for selecting a back button 1131 displayed on the display, the keyword set 1110 may be displayed again.

According to the embodiments of the present disclosure, the above-described method may also be embodied as processor readable codes on a processor readable recording medium. Examples of the processor readable medium include read-only memory (ROM), random-access memory (RAM), CD-ROMs, magnetic tapes, floppy disks, and optical data storage devices.

The display device described above is not limited to the configuration and method of the embodiments described above, and the embodiments may be configured by selectively combining all or portion of the embodiments so that various modifications may be made.

## Claims

1. A display device comprising:
a display configured to display a web content; and
a controller configured to:
extract a plurality of candidate search items by using a web document of the web content;
determine a plurality of final search items from the plurality of candidate search items based on a sorting condition;
obtain first type keyword items from the plurality of determined final search items; and
display the obtained keyword items on the display.

2. The display device according to claim 1, wherein, based on receiving a search request for a position of a search item contained in the plurality of candidate search items, the controller is configured to obtain candidate search items disposed neighboring the search item of the plurality of candidate search items as the plurality of final search items.

3. The display device according to claim 2, wherein the controller is configured to:
obtain coordinate information of each of the plurality of candidate search items comprising the search item; and
determine the candidate search items neighboring the search item as the plurality of final search items by using the coordinate information.

4. The display device according to claim 1, wherein, based on a priority option being set, the controller is configured to determine the plurality of final search items from the plurality of candidate search items according to the priority option.

5. The display device according to claim 4, wherein the priority option comprises an option for extracting one of a content title and a clickable item of the plurality of candidate search items.

6. The display device according to claim 1, further comprising a network interface for communicating with an external server,
wherein the controller is configured to:
transmit the plurality of final search items to the external server;
receive a second type keyword items for each of the plurality of final search items from the external server; and
display the first type keyword items and the second type keyword items on the display.

7. The display device according to claim 1, wherein, when receiving a command from a remote control device, the controller is configured to extract the plurality of candidate search items by using the web document of the web content.

8. The display device according to claim 1, wherein, when receiving an application program interface (API) request, the controller is configured to extract the plurality of candidate search items by using the web document of the web content.

9. The display device according to claim 1, wherein the controller comprises a web engine that extracts the plurality of candidate search items and coordinate information of each of the plurality of candidate search items by using the web document of the web content.

10. The display device according to claim 1, wherein each of the plurality of candidate search items comprises a clickable item, an item with a link, and an image item.

11. The display device according to claim 1, wherein the web content comprises either an execution screen of a progressive web application (PWA) or a web page executed through a web browser.

12. The display device according to claim 1, wherein the controller comprises a web interface that receives a trigger for providing a keyword search function.

13. The display device according to claim 1, wherein the controller is configured to:
receive a command for selecting one of the plurality of keyword items; and
display a search result for the selected keyword item on the display in response to the received command.

14. The display device according to claim 13, wherein the controller is configured to display the search result for the selected keyword item through a mini browser while displaying the web content.

15. A method for operating a display device, the method comprising:
displaying a web content;
extracting a plurality of candidate search items by using a web document of the web content;
determining a plurality of final search items from the plurality of candidate search items based on a sorting condition;
obtaining first type keyword items from the plurality of determined final search items; and
displaying the obtained keyword items.
